# Europäisches Patentamt
## European Patent Office
### Office européen des brevets

(19)

(11) Veröffentlichungsnummer: **0 203 248**
A1

(12) # EUROPÄISCHE PATENTANMELDUNG

(21) Anmeldenummer: 85890113.5

(22) Anmeldetag: 20.05.85

(51) Int. Cl.⁴: **B 65 D 1/02**

(43) Veröffentlichungstag der Anmeldung: 03.12.86
Patentblatt 86/49

(84) Benannte Vertragsstaaten: BE DE FR GB IT NL

(71) Anmelder: **Steringer, Hans, Hasnerstrasse 52, A-1160 Wien (AT)**

(72) Erfinder: **Steringer, Hans, Hasnerstrasse 52, A-1160 Wien (AT)**

(54) Mehrwegglasflasche mit Scheuerschutzzone und einem mitverbunderen, mitdrehbaren Schraubverschluss.

(57) Das häßliche Anscheuern der Mehrwegglasflaschen in den Scheuerzonen wird durch die in einer oder zwei Reihen angeordneten nestartigen Vertiefungen und rippenartigen Erhöhungen auf ein Minimum reduziert und gleichzeitig als ansprechenden optischen Kontrast aufgewertet.

Der mit der Mehrweggflasflasche mitverbundene Mehrweg-Schraubverschluß ist so konstruiert, daß er durch Kunststoffäden (3) mit einem Halterungsring (2) verbunden ist, welcher unter der Flaschenkopf-Halterungsrippe (5) eingerastet drehbar festhält. Als hygienisches Dichtungselement dient die schlauchartige Hohlrippe (9a).

Detail A

Patentanmelder und Erfinder:
Hans Steringer, A-1160 Wien, Hasnerstrasse 52

## Mehrwegglasflasche mit Scheuerschutzzonen und einem mitverbundenen, mitdrehbaren Schraubverschluß.

Die Erfindung bezieht sich auf neuartige Scheuerschutzzonen und einen mitverbundenen, mitdrehbaren Kunststoffschraubverschluß für Mehrwegglasflaschen.

Die handelsüblichen Mehrwegglasflaschen werden in Kunststoffkisten ab Abfüllbetrieb zum Handel geliefert. Im Abfüllbetrieb selbst und auf dem Transportwege werden die Glasflaschen an zwei Stellen an ihrer äußeren Oberfläche, und zwar rundum in der Breite von 1 - 2 cm, in relativ kurzer Zeit angescheuert. Dadurch erhalten diese Flaschen an den Scheuerstellen ein unschönes, nahezu häßliches Aussehen, weshalb sie im Abfüllbetrieb aus dem Umlauf gezogen und durch neue ersetzt werden, wo sie dann im Bruchcontainer landen. Dies ist jedoch völlig unwirtschaftlich, zumal weltweit milliarden solcher Mehrwegglasflaschen, insbesondere Bierflaschen, aus diesem simplen Grund alljährlich vernichtet werden.

Zum Stand der Technik sei gesagt, daß bisher diverse Vorschläge und Erfindungen in dieser Richtung gemacht wurden, sich in der Praxis jedoch nicht bewährt haben.

Dieser Erfindung liegt nun die Aufgabe zugrunde, diesen Mangel zu beseitigenund wird durch folgende Lösung erreicht:

An der äußerden Oberfläche der Mehrwegglasflasche scheint bei diesen beiden Scheuerstellen rundum je eine Scheuerschutzzone in der Breite von z.B. 1 - 2 cm auf, welche in ganz kleinen Abständen, in einer oder zwei Reihen angeordnet nestartige Vertiefungen mit rippenartigen Erhöhungen (z.B. 1,7 mm h. x 3 mm Br.) aufweist. Die rippenartigen Erhöhungen, die in der Praxis natürlich abgerundet-glatt sind, fangen die Scheuerung auf, die nestartigen Vertiefungen sind auch deshalb erforderlich, damit die Glasflasche auch dann noch immer schön und einsatzfähig bleibt, wenn die Rippchen nach entsprechend langer Zeit dann doch einmal abgescheuert sind. Dadurch wird erreicht, daß das Anscheuern der Mehrwegglasflaschen in den Rundumbereichen absolut verhindert wird, zumal die nestartigen Vertiefungen überhaupt nicht angescheuert werden können und immer glanzklar bleiben, während die rippenartigen Erhöhungen zwar angescheuert werden, jedoch durch ihre geringe Anzahl und Größe als interessanter matter, wie gewolltgeschliffener Konrast aufscheinen.

Die Erfindung, rund um die Mehrwegglasflasche, bezieht sich gleichzeitig auch auf einen neuartigen Kunststoff-Schraubverschluß mit einer mitverbundenen und mitdrehbaren Halterung für Mehrwegglasflaschen aller Art. Die derzeit handelsüblichen Getränkeglasflaschen sind weltweit mit einem Einweg-Schraubverschluß versehen. Nach dem Verbrauch der diversen Getränke werden die Schraubverschlüsse im Abfüllbetrieb beseitigt bezw. nicht wiederverwendet, dies aus hygienischen Gründen, zumal die derzeitigen Schraubverschlüsse aus Kunststoff wegen ihrer schrägstehenden Dichtungslippen geradezu eine Sammelstelle für Bakterienstämme aller Art darstellen. Diese können durch das übliche Waschen der Flaschen nicht gereinigt werden. Auf dem Gebiet "Kontra dem Wegwerfen" sind unendlich viele Möglichkeiten für den Erfindungsgeist brachliegend vorhanden, um durch entsprechend sinnvolle und folgerichtige Erfindungen weltweit gewaltige Mengen an Rohstoffen aller Art und auf vielen Gebieten der Finalprodukte einzusparen.

Dieser Erfindung liegt nun die Aufgabe zugrunde, einen an sich bekannten Schraubverschluß aus Kunststoff, bei entsprechender Änderung des Dichtungsbereiches, mit einer erfindungsgemäß verbundenen, mitdrehbaren Halterung für Mehrwegglasflaschen zu schaffen, welcher alle Nachteile beseitigt und seine Aufgabenstellung zur Gänze erreicht.

Diese Aufgabe wird erfindungsgemäß dadurch gelöst, daß im Kunststoff-Spritzgußverfahren in einem einzigen Arbeitsgang ein fertiger Schraubverschluß -1- hergestellt wird, an dessen unterem, dem Flaschenkopf zugewandten Kantenrand -5- ein Halterungsring-2-

0203248

aufscheint, welcher durch einige nebeneinanderliegende Verbindungsstreifen (Fäden) -3-, aus dem gleichen Kunststoffmaterial, mit dem Schraubverschluß -1- so verbunden ist, daß er sich bei jeder Schraubbewegung des Schraubverschlußes automatisch mitdreht, jedoch unter dem Kantenrand -5- eingerastet, nach obenhin nich herausgezogen werden kann, außer durch absichtliche Kraftanwendung. Der Halterungsring -2- weist eine elastische Dehnungsfuge auf, um leichter über den Kantenrand -5- geschoben zu werden und dort eingerastet festzuhalten. Der Halterungsring -2- ist mit dem Schraubverschluß -1- durch die punktartigen Verbindungen -4- zusätzlich mitverbunden, und zwar an entsprechend vielen Stellen, um einen fixen und kompletten Halt für den Montageautomaten zu haben.

Beim Abschrauben des Schraubverschlusses bleibt dieser durch die Verbindungsfäden -3- mit dem Halterungsring -2- stets verbunden, kann daher niemals herabfallen, verlegt werden oder aber verloren gehen und jederzeit zum Zuschrauben bei der Hand.

Die Verbindungsfäden sind weichelastisch und strapazfähig, sodaß sie hunderte Auf- unf Zuschraubungen aushalten. Diese Verndungsfäden -3- sind untereinander bei -3a- zusätzlich querverbunden, um einen zusätzlichen strapazfähigen Halt zu gewähren.

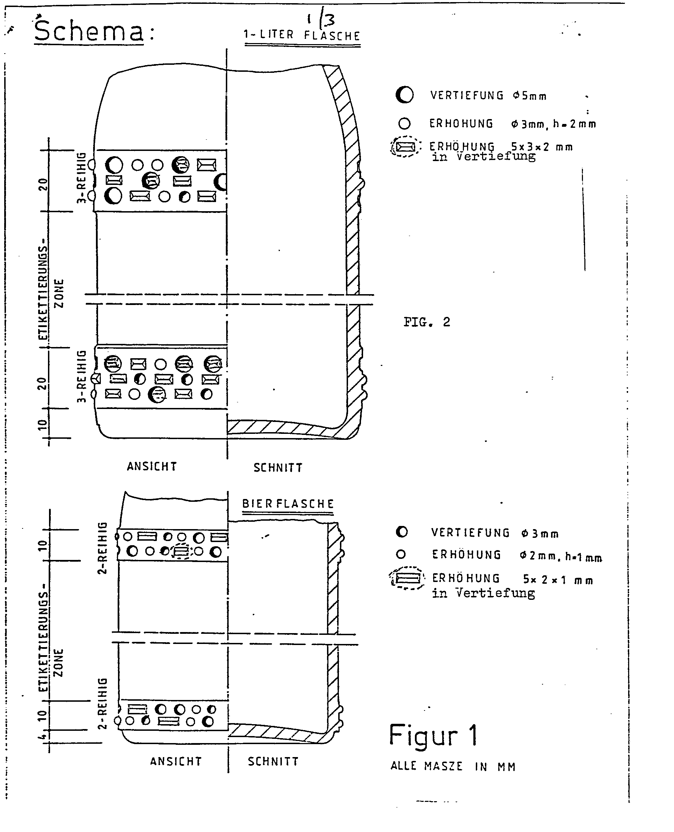

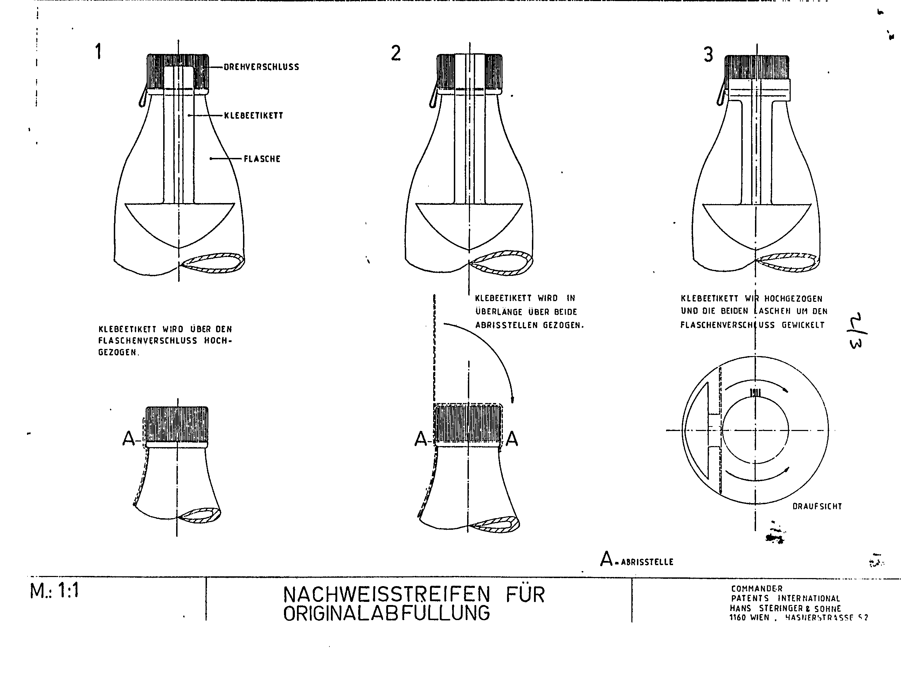

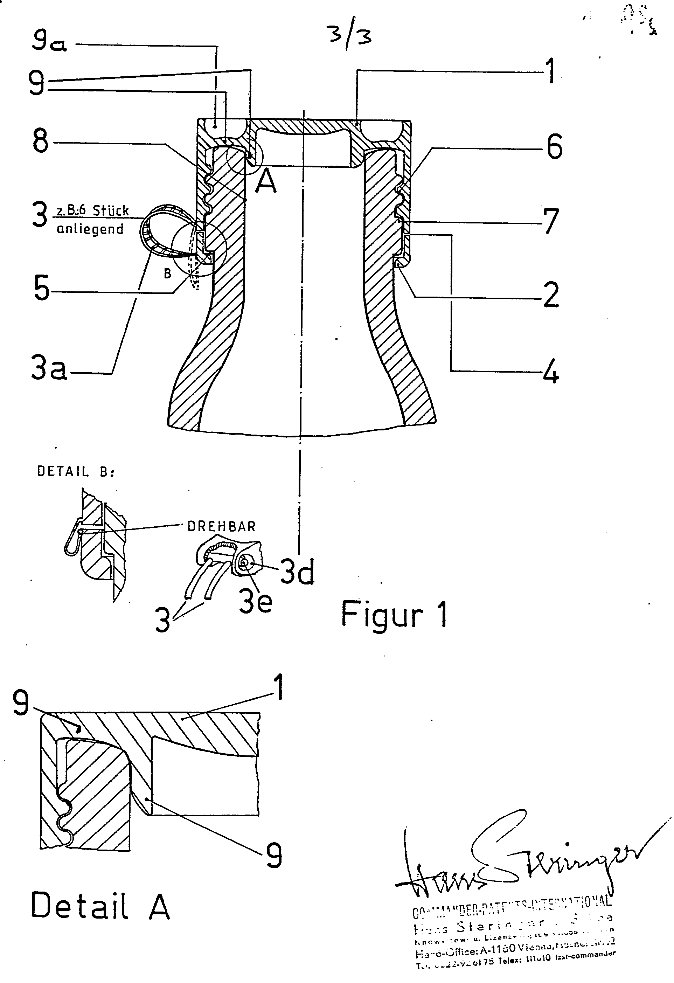

Das Entscheidende um den Bakterienstämmen überhaupt keine Chance zum Einnisten und Vermehren im Inneren des Schraubverschlusses zu geben, wird erfindgungsgemäß dadurch erreicht, daß im Dichtungsbereich -9- ein rundum durchgehendes mitverbundenes und schlauchartiges Röhrchen -9- mit entsprechendem Querschnitt gem. Fig. 1 im Inneren des Schraubverschlusses -1- aufscheint, bezw. eine nach innen gerichtete rundum verlaufende schlauchartige Hohlrippe -9a- aufscheint, welche spritztechnisch durch die Vertiefungsrille -9a- auf der Außenseite des Schraubverschlusses erreicht wird. Durch diese Ausführungsform wird die elastische und völlig glatte schlauchartige Dichtungsrippe im Inneren erreicht und entspricht zur Gänze auch den hygienischen Anforderungen. Für die Herstellung der erfindungsgemäßen Schraubverschlüsse sind keine neuen Spritzgußformen erforderlich, viel-

- 4 -

mehr können die vorhandenen, durch kleine frästechnische Ergänzungen, verwendet werden.

Zum Schraubverschluß gehört auch ein Nachweisstreifen der Originalabfüllung für die Mehrwegglasflaschen.

Hierzu meine erfindungsgemäße einfachste und billigste Lösung, die ich gleichzeitig hiermit zum Patent anmelde:

Das auf der Glasflasche befindliche kleinere Firmenetikett, das unmittelbar unter dem Schraubverschluß klebt bezw. aufscheint, wird um einige Zentimeter nach oben verschoben bezw. verlegt oder verlängert, wo es von der Etikettiermaschine über den Schraubverschluß geklebt wird. In der Zeichnung Fig. 1 - 3 sowie Detail A sind einige Varianten dargestellt.

Patentanmelder und Erfinder:
Hans Steringer, A-116o Wien

0203248

PATENTANSPRÜCHE

1.) Mehrwegglasflasche mit Scheuerschutzzonen dadurch gekennzeichnet, daß in den Rundum-Scheuerbereichen der
Glasflaschen je eine Scheuerschutzzone aufscheint, welche
in einer oder zwei Reihen angeordnet nestartige Vertiefungen mit rippenartigen Erhöhungen aufweist.

2.) Mehrwegglasflasche mit einem mitverbundenen, mitdrehbaren
Kunststoff-Schraubverschluß dadurch gekennzeichnet, daß
der Schraubverschluß -1- mit einem Halterungsring -2- und
Verbindungsfäden -3- versehen ist, wobei der Halterungsring durch die Verbindungsfäden mit dem Schraubverschluß
so verbunden ist, daß er sich bei jeder Schraubbewegung
automatisch mitdreht, jedoch unter der Halterungsrippe -5-
eingerastet drehbar festhält.

3.) Mehrwegglasflasche nach Anspruch 2 dadurch gekennzeichnet,
daß im Inneren des Schraubverschlusses als Dichtungselement
ein rundum durgehendes hohles-schlauchartiges Röhrchen aufschein bezw., daß dort als Dichtungselement eine nach innen
gerichtete rundum verlaufende schlauchartige Hohlrippe -9a-
aufscheint, welche spritzgußtechnisch durch die Vertiefungsrille -9a- auf der Außenseite des Schraubverschlußes erreicht
wird.

4.) Mehrwegglasflasche mit Nachweisstreifen der Originalabfüllung dadurch gekennzeichnet, daß das obere Firmenklebeetikett entsprechend nach oben verschoben bezw, verlängert
wird und von der Etikettiermaschine über den Schraubverschluß
festgeklebt wird. ------
Patentanmelder und Erfinder:
Hans Steringer, A-116o Wien

Schema:
1/3
1-LITER FLASCHE

VERTIEFUNG ⌀5mm
ERHÖHUNG ⌀3mm, h=2mm
ERHÖHUNG 5×3×2 mm
in Vertiefung

FIG. 2

3-REIHIG
20
ETIKETTIERUNGS-ZONE
20
3-REIHIG
10

ANSICHT   SCHNITT

BIERFLASCHE

VERTIEFUNG ⌀3mm
ERHÖHUNG ⌀2mm, h=1mm
ERHÖHUNG 5×2×1 mm
in Vertiefung

2-REIHIG
10
ETIKETTIERUNGS-ZONE
10
2-REIHIG

ANSICHT   SCHNITT

Figur 1

ALLE MASZE IN MM

**1** DREHVERSCHLUSS
KLEBEETIKETT
FLASCHE

KLEBEETIKETT WIRD ÜBER DEN
FLASCHENVERSCHLUSS HOCH-
GEZOGEN.

A

**2**

KLEBEETIKETT WIRD IN
ÜBERLÄNGE ÜBER BEIDE
ABRISSTELLEN GEZOGEN.

A        A

**3**

KLEBEETIKETT WIR HOCHGEZOGEN
UND DIE BEIDEN LASCHEN UM DEN
FLASCHENVERSCHLUSS GEWICKELT

DRAUFSICHT

2/3

A = ABRISSTELLE

| M.: 1:1 | NACHWEISSTREIFEN FÜR ORIGINALABFÜLLUNG | COMMANDER PATENTS INTERNATIONAL HANS STERINGER & SÖHNE 1160 WIEN , HASNERSTRASSE 52 |
|---|---|---|

0203248

0203248

3/3

9a
9
8
1
6
3  z.B.6 Stück anliegend
5
7
3a
2
4

A
B

DETAIL B:

DREHBAR

3d
3e
3

Figur 1

9
1

9

Detail A

**Europäisches Patentamt**

**EUROPÄISCHER RECHERCHENBERICHT**

Nummer der Anmeldung

EP 85 89 0113

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE - A - 2 910 575 (VEREINIGTE VERPACKUNGSGESELLSCHAFT) <br><br> * Seite 6, Zeile 10 - Seite 7, Zeile 7; Figuren 1-4 * <br> -- | 1 | B 65 D 1/02 |
| A | FR - A - 1 434 754 (THE FUTURE BOTTLE CO.) <br><br> * Seite 2, linke Spalte, Zeilen 36-46, rechte Spalte, Zeilen 26-32; Figur 1 * <br> -- | 1 | |
| A | DE - A - 2 807 949 (VEREINIGTE VERPACKUNGSGESELLSCHAFT) <br><br><br> ---------- | | |

| | RECHERCHIERTE SACHGEBIETE (Int. Cl.4) |
|---|---|
| | B 65 D |

X X Der vorliegende Recherchenbericht wurde für alle Patentansprüche erstellt X X

| Recherchenort | Abschlußdatum der Recherche | Prüfer |
|---|---|---|
| DEN HAAG | 13-01-1986 | BESSY |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

Europäisches
Patentamt

## GEBÜHRENPFLICHTIGE PATENTANSPRÜCHE

Die vorliegende europäische Patentanmeldung enthielt bei ihrer Einreichung mehr als zehn Patentansprüche.

☐ Alle Anspruchsgebühren wurden innerhalb der vorgeschriebenen Frist entrichtet. Der vorliegende europäische Recherchenbericht wurde für alle Patentansprüche erstellt.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt für die Anspruchsgebühren entrichtet wurden.

nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung; sie enthält mehrere Erfindungen oder Gruppen von Erfindungen, nämlich:

1. Patentanspruch 1: Mehrwegglasflasche mit Scheuerschutzzonen

2. Patentansprüche 2,3: Kunststoff-Schraubverschluss mit Halterungsring

3. Patentanspruch 4: Mehrwegflasche mit Nachweisstreifen der Originalabfüllung

☐ Alle weiteren Recherchengebühren wurden innerhalb der gesetzten Frist entrichtet. Der vorliegende europäische Recherchenbericht wurde für alle Patentansprüche erstellt.

☐ Nur ein Teil der weiteren Recherchengebühren wurde innerhalb der gesetzten Frist entrichtet. Der vorliegende europäische Recherchenbericht wurde für die Teile der Anmeldung erstellt. die sich auf Erfindungen beziehen, für die Recherchengebühren entrichtet worden sind.

nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt. die sich auf die zuerst in den Patentansprüchen erwähnte Erfindung beziehen.

nämlich Patentansprüche: 1